# EUROPEAN PATENT APPLICATION

(11) **EP 4 472 310 A1**
(43) Date of publication of application: **04.12.2024**
(21) Application number: 23746409.4
(22) Date of filing: 28.01.2023
(51) Int. Cl.: H04W 72/02

(54) **RESOURCE SELECTION METHOD AND APPARATUS, AND TERMINAL**

(30) Priority: 28.01.2022 CN 202210107220
(71) Applicant: VIVO MOBILE COMMUNICATION CO., LTD., Dongguan, Guangdong 523863 (CN)
(72) Inventor: PENG, Shuyan, Dongguan, Guangdong 523863 (CN); JI, Zichao, Dongguan, Guangdong 523863 (CN); JIANG, Lei, Dongguan, Guangdong 523863 (CN)
(74) Representative: Conti, Marco
(86) International application number: PCT/CN2023/073599
(87) International publication number: WO 2023/143532

(57) **Abstract**

This application discloses a resource selection method and apparatus, and a terminal, and belongs to the field of communication technologies. The resource selection method of embodiments of this application includes: A terminal obtains first information. The terminal performs resource selection and/or resource exclusion based on the first information. The first information includes at least one of the following: listen before talk LBT information; channel occupancy time COT information; information of a recommended resource; a transmission type; a source identifier or destination identifier; channel busy ratio CBR information; channel occupancy ratio CR information; quality of service QoS information; and a data packet size.

## Description

### CROSS-REFERENCE TO RELATED APPLICATIONS

This application claims priority to Chinese Patent Application No. 202210107220.9 filed in China on January 28, 2022, which is incorporated herein by reference in its entirety.

### TECHNICAL FIELD

This application belongs to the field of communication technologies, and in particular, relates to a resource selection method and apparatus, and a terminal.

### BACKGROUND

In a New Radio (New Radio, NR) sidelink (sidelink, SL), a terminal detects sidelink control information (Sidelink Control Information, SCI), and excludes a resource indicated and/or reserved in the SCI. In resource exclusion, only the indicated resource and/or reserved resource are/is excluded. A maximum of three resources are excluded for one piece of SCI indication. There is a same probability of resource selection within remaining resources. If selection is performed on an unlicensed band in this manner, a probability that another reserved resource within a channel occupancy time (Channel Occupancy Time, COT) and/or listen before talk (Listen Before Talk, LBT) on the unlicensed band is selected by the terminal is the same as that of a resource outside the COT and/or LBT. Therefore, a probability of collision on the unlicensed band increases.

### SUMMARY

Embodiments of this application provide a resource selection method and apparatus, and a terminal, which can reduce a probability of collision on an unlicensed band.

According to a first aspect, a resource selection method is provided, including:

A terminal obtains first information.

The terminal performs resource selection and/or resource exclusion based on the first information.

The first information includes at least one of the following:
listen before talk LBT information;
channel occupancy time COT information;
information of a recommended resource;
a transmission type;
a source identifier or destination identifier;
channel busy ratio CBR information;
channel occupancy ratio CR information;
quality of service QoS information; and
a data packet size.

According to a second aspect, a resource selection apparatus is provided, including:
an obtaining module, configured to obtain first information; and
a processing module, configured to perform resource selection and/or resource exclusion based on the first information.

The first information includes at least one of the following:
listen before talk LBT information;
channel occupancy time COT information;
information of a recommended resource;
a transmission type;
a source identifier or destination identifier;
channel busy ratio CBR information;
channel occupancy ratio CR information;
quality of service QoS information; and
a data packet size.

In a third aspect, a terminal is provided. The terminal includes a processor and a memory. The memory stores a program or an instruction that can be run on the processor. When the program or the instruction is executed by the processor, steps of the method according to the first aspect are implemented.

According to a fourth aspect, a terminal is provided. The terminal includes a processor and a communication interface. The processor is configured to: obtain first information, and perform resource selection and/or resource exclusion based on the first information.

The first information includes at least one of the following:
listen before talk LBT information;
channel occupancy time COT information;
information of a recommended resource;
a transmission type;
a source identifier or destination identifier;
channel busy ratio CBR information;
channel occupancy ratio CR information;
quality of service QoS information; and
a data packet size.

According to a fifth aspect, a readable storage medium is provided. The readable storage medium stores a program or an instruction. When the program or the instruction is executed by a processor, steps of the method according to the first aspect are implemented.

According to a sixth aspect, a chip is provided. The chip includes a processor and a communication interface. The communication interface is coupled to the processor. The processor is configured to run a program or an instruction to implement the method according to the first aspect.

According to a seventh aspect, a computer program product is provided. The computer program product is stored in a storage medium. The computer program product is executed by at least one processor to implement the steps of the resource selection method according to the first aspect.

In an embodiment of this application, a terminal obtains first information, and performs resource selection and/or resource exclusion based on the first information. The first information may include information such as LBT information and COT information. In this case, impact of the information such as the LBT information and the COT information is considered when the terminal performs resource selection and/or resource exclusion. In this way, a probability of collision on an unlicensed band can be reduced.

### BRIEF DESCRIPTION OF THE DRAWINGS

FIG. 1 is a block diagram of a wireless communication system to which an embodiment of this application may be applied;
FIG. 2 to FIG. 4 are flowcharts of a resource selection method according to embodiments of this application;
FIG. 5 is a block diagram of a structure of a terminal-side resource selection apparatus according to an embodiment of this application;
FIG. 6 is a diagram of a structure of a communication device according to an embodiment of this application; and
FIG. 7 is a diagram of a structure of a terminal according to an embodiment of this application.

### DETAILED DESCRIPTION

Technical solutions in embodiments of this application are clearly described in the following with reference to accompanying drawings in embodiments of this application. It is clear that the described embodiments are merely some rather than all of embodiments of this application. All other embodiments obtained by a person skilled in the art based on embodiments of this application fall within the protection scope of this application.

In the specification and claims of this application, terms such as "first" and "second" are used to distinguish similar objects, but are not used to describe a specific sequence or order. It should be understood that terms used in this way are exchangeable in a proper case, so that embodiments of this application can be implemented in an order different from the order shown or described herein. In addition, objects distinguished by using "first" and "second" are usually of a same type, and the terms do not limit a quantity of the objects. For example, a first object can be one object or more objects. In addition, "and/or" used in this specification and the claims represents at least one of connected objects. The character "/" usually indicates an "or" relationship between associated objects.

It should be noted that technologies described in embodiments of this application are not limited to a long term evolution (Long Term Evolution, LTE) system/an LTE-Advanced (LTE-Advanced, LTE-A) system, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency division multiple access (Single-carrier Frequency Division Multiple Access, SC-FDMA). Terms "system" and "network" in embodiments of the application are often used interchangeably. The described technologies can be applied to the foregoing systems and radio technologies, and can also be applied to other systems and radio technologies. The following describes a new radio (New Radio, NR) system for example purposes, and NR terms are used in most of the following descriptions. However, these technologies may also be applied to an application other than the NR system application, for example, a 6th generation (6th Generation, 6G) communication system.

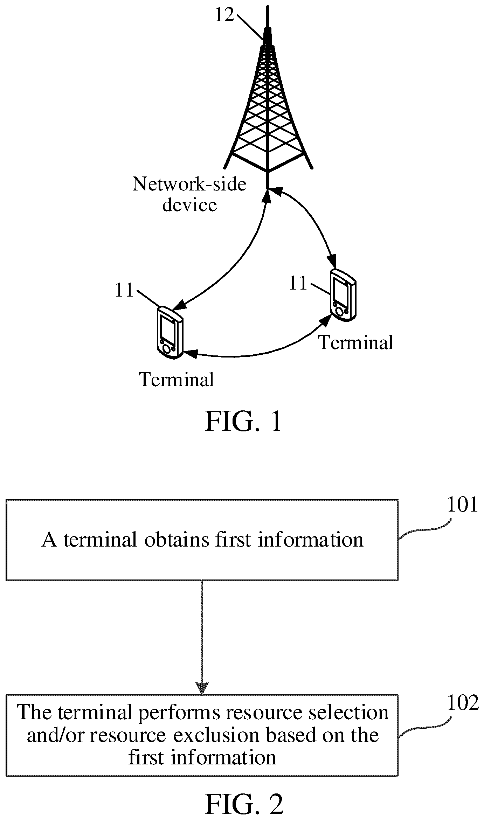

FIG. 1 is a block diagram of a wireless communication system to which an embodiment of this application may be applied. The wireless communication system includes a terminal 11 and a network-side device 12. The terminal 11 may be a terminal-side device like a mobile phone, a tablet personal computer (Tablet Personal Computer), a laptop computer (Laptop Computer), which is also referred to as notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, for example, a refrigerator, a television, a washing machine, or furniture), a games console, a personal computer (personal computer, PC), a teller machine, and a self-service machine. The wearable device includes: a smart watch, a smart band, a smart headphone, smart glasses, a smart jewelry (a smart bangle, a smart bracelet, a smart ring, a smart necklace, a smart anklet, a smart ankle bracelet, and the like), a smart wristband, a smart cloth, and the like. It is to be noted that a specific type of the terminal 11 is not limited in this embodiment of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home B Node, a home evolved B Node, a transmitting receiving point (Transmitting Receiving Point, TRP), or another proper term in the art. The base station is not limited to a particular technical vocabulary as long as the same technical effect is achieved. Only a base station in the NR system is used as an example in embodiments of this application, but a specific type of the base station is not limited.

In a future communication system, a shared spectrum like an unlicensed band (unlicensed band) may assist, as a supplement to a licensed band (licensed band), operators in scaling up services. In order to be consistent with NR deployments and to maximize NR-based unlicensed access as much as possible, unlicensed bands may operate in 5 GHz, 37 GHz, and 60 GHz bands. Because the unlicensed band is used in a plurality of technologies (Radio Access Technologys, RATs) such as WiFi, radar, long term evolution (Long Term Evolution, LTE)-licensed-assisted access (Licensed-Assisted Access, LAA), in specific countries or areas, usage of the unlicensed band needs to comply with regulations (regulation), such as listen before talk (listen before talk, LBT) and a maximum channel occupancy time (maximum channel occupancy time, MCOT), to ensure that all devices can fairly use the resource. When a transmitting node needs to send information, LBT needs to be performed first, energy detection (energy detection, ED) is performed on a nearby node. When a detected power is below a threshold, a channel is considered idle (idle), and the transmitting node can perform transmission. Otherwise, the channel is considered busy, and the transmitting node cannot perform transmission. The transmitting node may be a base station, UE, a WiFi access point (WiFi Access Point, WiFi AP), or the like. A channel occupancy time (Channel Occupancy Time, COT) cannot exceed an MCOT after the transmitting node starts transmission.

Commonly used LBT categories (category) may be classified into a category 1, a category 2, and a category 4. The category 1 LBT indicates that the transmitting node does not perform LBT, that is, no LBT or immediate transmission (immediate transmission). The category 2 LBT is one-shot LBT. In other words, the node performs LBT once before transmission, and performs transmission if the channel is idle, and does not perform transmission if the channel is busy. The category 4 LBT is a channel sensing mechanism based on back-off (back-off) in which a transmitting node performs back-off when learns, through sensing, that a channel is busy, and continues sensing until the transmitting node learns, through sensing, that the channel is idle. For a gNB, the category 2 LBT is applied to a dedicated reference signal (Dedicated Reference Signal, DRS) without a physical downlink shared channel (Physical Downlink Shared Channel, PDSCH), and the category 4 LBT is applied to a PDSCH, a physical downlink control channel (Physical Downlink Control Channel, PDCCH) and/or an enhancement physical downlink control channel (Enhancement PDCCH, ePDCCH). For UE, the category 4 LBT corresponds to a typel UL channel access procedure (type1 UL channel access procedure), and the category2 LBT corresponds to a type2 UL channel access procedure (type2 UL channel access procedure).

For load based equipment (Load Based Equipment, LBE), a transmitting node may start LBT from any moment, and then performs transmission until the transmitting node learns, through sensing, that the channel is idle. There is no fixed sensing time for the transmitting node. When the transmitting node learns, through sensing, that a channel is busy, skip does not need to be performed, and back-off (backoff) of several evolved clear channel assessments (Evolved Clear Channel Assessment, eCCA) is performed to continue sensing until an eCCA counter (counter) is zero.

NR SL defines two resource allocation modes (mode). One mode is a model 1. In this mode, a base station schedules resources. The other mode is a mode 2. In this mode, UE decides a resource used for transmission. In this case, resource information may be a broadcast message from a base station or pre-configuration information. The mode 1 and/or the mode 2 may be used if the UE operates in a range of the base station and establishes a radio resource control (Radio Resource Control, RRC) connection with the base station. Only the mode 2 is used if the UE operates in the range of the base station but does not establish the RRC connection with the base station. If the UE is out of the range of the base station, the UE can only operate in the mode 2 for SL transmission according to pre-configuration information.

For the mode 2, a specific working manner is as follows. 1) After resource selection is triggered, transmitting (TX) UE first determines a resource selection window. A lower boundary of the resource selection window is a T1 time after resource selection is triggered, and an upper boundary of resource selection is a T2 time after the trigger, where T2 is a value selected by an implementation of the UE from a packet delay budget (packet delay budget, PDB) of transport block (Transport Block, TB) transmission of the UE, and T2 is not earlier than T1. 2) Before resource selection, the UE needs to determine a candidate resource set (candidate resource set) for resource selection. A reference signal received power (Reference Signal Received Power, RSRP) measured on a resource in the resource selection window is compared with a corresponding RSRP threshold (threshold). If the RSRP is lower than a RSRP threshold, the resource is a resource in the candidate resource set. 3) After the resource set is determined, the UE randomly selects a transmission resource in the candidate resource set. In addition, at a current transmission, the UE may reserve a transmission resource for next transmission (which may be a same TB or a different TB).

NR SL supports a chained resource reservation manner. To be specific, one piece of sidelink control information (SCI) can be used to reserve a current resource and at most two other resources; and two reserved resources can be indicated for a next resource. Within the selection window, resources can be continuously reserved in a dynamic reservation manner.

In an NR unlicensed band (NR unlicensed band, NRU), "detection" is to determine whether a detected resource is busy or idle. The determining is performed based on occupancy of a channel bandwidth, and an energy detection result. Depending on a determining result, whether a value of a counter decreases or whether information is sent on a next candidate resource.

For a sidelink (SL), "detection" is to determine a resource occupancy/interference status on a detected resource based on a RSRP on the resource. Then, whether there is a possibility that a candidate resource in a corresponding resource selection window is severely interfered is determined, so as to determine whether a corresponding resource needs to be excluded.

The concept of detection is used in the NRU and SL. However, criteria for detection are different in the two systems. In embodiments of this application, "detection" refers to NRU detection and/or SL detection, or a new detection method for determining. This is not limited herein.

The resource selection method provided in embodiments of this application is explained in detail below in some embodiments and application scenarios thereof with reference to the accompanying drawings.

An embodiment of this application provides a resource selection method. As shown in FIG. 2, the method includes the following steps.

Step 101: The terminal obtains first information.

Step 102: The terminal performs resource selection and/or resource exclusion based on the first information.

The first information includes at least one of the following:
listen before talk LBT information;
channel occupancy time COT information;
information of a recommended resource;
a transmission type, to be specific, a transmission type of a data packet or sidelink (SL) process (process) or a hybrid automatic repeat request (Hybrid Automatic Repeat Request, HARQ) process, where the transmission type may be a unicast (unicast), groupcast (groupcast), or broadcast (broadcast) type (type);
a source identifier or destination identifier (destination ID), where the source identifier or destination identifier is an identifier of the terminal, and the source identifier is used if the terminal is a transmitting terminal, or the destination identifier is used if the terminal is a data receiving terminal; the source identifier may represent one terminal, a group of terminals, or all terminals; the source identifier may correspond to a unicast service, a groupcast service, or a broadcast service; the destination identifier may represent one terminal, a group of terminals, or all terminals; and the destination identifier may correspond to a unicast service, a groupcast service, or a broadcast service;
channel busy ratio (channel busy ratio, CBR) information, which is CBR information obtained through measurement by the terminal;
channel occupancy ratio (channel occupancy ratio, CR) information, which is CR information obtained through measurement by the terminal;
quality of service (Quality of Service, QoS) information, which may be a priority, a remaining packet delay budget, and the like, for example, the QoS information may be QoS information of a data packet or an SL process or HARQ process; and
a data packet size.

In this embodiment of this application, the terminal obtains the first information, and performs resource selection and/or resource exclusion based on the first information, where the first information may include information such as the LBT information and the COT information. In this way, a probability of collision on an unlicensed band can be reduced because impact of the information such as the LBT information and the COT information is considered when the terminal performs resource selection and/or resource exclusion.

In some embodiments, the LBT information includes at least one of the following:
a LBT category, like a cat 1 LBT, a cat 2 LBT, or a cat 4 LBT, or a type 1, type 2A, type 2B, or type 2C channel access procedure, which may be a LBT type of the UE, a UL channel access procedure, or SL channel access procedure;
channel access priority class (Channel Access Priority Class, CAPC) information of a data packet;
duration of first LBT, determined based on a CAPC or a size of contention window (contention window, CW);
a size of the CW;
a range of the CW; and
a maximum value of the CW.

The CAPC information of the data packet may include at least one of the following:
a CAPC of a to-be-sent data packet; and
a CAPC indicated by a receiving resource.
In some embodiments, the COT information includes at least one of the following:
a COT type, where a possible type indication may be a sharing (sharing) COT or an initiated (initiated) COT;
remaining COT duration (duration); and
COT duration.

In some embodiments, that the terminal performs resource selection and/or resource exclusion based on the first information includes:
The terminal excludes X resources based on the LBT information, where X is a positive integer, and the X resources satisfy at least one of the following:
The X resources are located before an indicated or reserved first resource, where the X resources may be X resources before the first resource, and there are no other resources between the X resources and the first resource, that is, the X resources are adjacent to the first resource; or the X resources are located before a first resource and are spaced apart from the first resource by a resources, that is, the X resources are not adjacent to the first resource, in other words, positions of the X resources are defined;
X is determined based on the duration of the first LBT, or the X resources are determined based on a minimum value of the CW, or the X resources are determined based on the maximum value of the CW, or the X resources are determined based on the maximum value and a minimum value of the CW; for example, the X resources are determined based on a minimum value of alphal*CW, or a maximum value of an alpha2*CW, or a minimum value of alphal*CW+an maximum value of an alpha2*CW, where values of alphal and alpha2 can be defined according to an actual requirement, for example, alpha1+alpha2=1; the X resources determined based on the minimum value of alphal*CW may be determined based on the minimum value, or may be determined based on a rounded value of the minimum value, or may be determined based on a roundup value of the minimum value; and similarly, the X resources determined based on the maximum value of alpha2*CW may be determined based on the maximum value, or may be determined based on a rounded value of the maximum value, or may be determined based on a roundup value of the maximum value; and
the X resources are determined based on a priority or CAPC of a to-be-sent data packet, or a priority or a CAPC in second information, where a length of LBT is related to the CAPC of the data packet, and a possible length of LBT may be determined based on a priority and/or CAPC carried in the detected SCI.

In the above embodiment, the second information may be SCI, and certainly, the second information is not limited to SCI and may be other information detected by the terminal.

In this embodiment, impact of the LBT information is considered when the terminal performs resource selection and/or resource exclusion. In this way, a probability of collision on an unlicensed band can be reduced.

The first resource is at least one of the following:
the resource indicated or reserved by the SCI, namely, a PSSCH resource indicated or reserved by SCI detected or received by the terminal;
a resource at which an M^{th} piece of SCI is located, where M is a positive integer, for example, M=1;
a physical sidelink feedback channel (Physical SideLink Feedback Channel, PSFCH) resource; and
a sidelink synchronization signal and PBCH block (SideLink Synchronization Signal and PBCH block, S-SSB) resource.

In some embodiments, that the terminal performs resource selection and/or resource exclusion based on the first information includes:

The terminal excludes Y resources based on the COT information, where Y is a positive integer, and the Y resources satisfy at least one of the following:
The Y resources are located at a beginning position of an indicated or reserved first resource (to be specific, the Y resources include the first resource, and the Y resources are resources starting from the first resource), or the Y resources are located after an indicated or reserved first resource (to be specific, the Y resources does not include the first resource, the Y resources are Y resources after the first resource, where the Y resources may be Y resources after the first resource, and there are no other resources between the Y resources and the first resource, that is, the Y resources are adjacent to the first resource; or the Y resources are located after the first resource and are spaced apart from the first resource by a resources, that is, the Y resources are not adjacent to the first resource), in other words, positions of the Y resources are defined;
the Y resources are COT duration or maximum COT duration;
the Y resources are remaining COT duration or remaining COT duration; and
the Y resources are determined based on a priority or a CAPC of a to-be-sent data packet, or a priority or a CAPC in second information.

In this embodiment, impact of the COT information is considered when the terminal performs resource selection and/or resource exclusion. In this way, a probability of collision on an unlicensed band can be reduced.

The first resource is at least one of the following:
the resource indicated or reserved by the SCI, namely, a PSSCH resource indicated or reserved by SCI detected or received by the terminal;
a resource at which an M^{th} piece of SCI is located, where M is a positive integer, for example, M=1;
a PSFCH resource; and
an S-SSB resource.

In some embodiments, that the terminal performs resource selection and/or resource exclusion based on the first information includes:
Performing resource selection or determining a candidate resource by the terminal based on the transmission type, the source identifier, and/or the destination identifier includes:
in a case that the transmission type is groupcast or broadcast, selecting, for data transmission, a resource within COT duration corresponding to a first resource; and/or
in a case that the transmission type is unicast and a destination identifier indicated in detected SCI is the terminal, if to-be-sent data of the terminal is broadcast data, selecting, for data transmission, a resource within COT duration or remaining COT duration corresponding to a resource reserved or indicated by the SCI; and if the to-be-sent data of the terminal is groupcast or unicast data and an identifier of the to-be-sent data is the same as a source identifier indicated in the SCI, selecting, for data transmission, a resource within the COT duration or the remaining COT duration corresponding to the resource reserved or indicated by the SCI; and/or
in a case that the destination identifier indicated in the SCI detected by the terminal is the terminal and a destination identifier of a data packet to be sent by the terminal is the source identifier indicated in the SCI, selecting, for data transmission, a resource within the COT duration corresponding to the resource reserved or indicated by the SCI.

In this embodiment, impact of the transmission type, the source identifier, and/or the destination identifier is considered when the terminal performs resource selection and/or resource exclusion. In this way, a probability of collision on an unlicensed band can be reduced.

The transmission type is a transmission type indicated in the detected SCI (or a transmission type of the reserved resource) or a transmission type determined based on the destination identifier indicated by the SCI.

In some embodiments, the in a case that the transmission type is groupcast or broadcast, selecting, for data transmission, a resource within COT duration or remaining COT duration corresponding to a first resource includes:
when a remaining resource (a resource other than the reserved resource) within the COT duration meets a quality of service requirement and/or a packet delay budget requirement and/or a resource size requirement of a data packet to be sent by the terminal, selecting, for data transmission, a resource within the remaining COT duration, in other words, COT sharing is performed but different time-domain resources are used; or
when a remaining resource in the first resource meets a quality of service requirement and/or a packet delay budget requirement and/or a resource size requirement of a data packet to be sent by the terminal, selecting, for data transmission, a remaining frequency-domain resource in the first resource, in other words, a same time-domain resource is used and different frequency-domain resources are used.

The first resource is at least one of the following:
the resource indicated or reserved by the SCI, namely, a PSSCH resource indicated or reserved by SCI detected or received by the terminal;
a resource at which an M^{th} piece of SCI is located, where M is a positive integer;
a PSFCH resource; and
an S-SSB resource.

In the above embodiment, the resource reserved or indicated by the SCI is at least one of the following:
a physical sidelink shared channel (Physical SideLink Shared Channel, PSSCH) resource;
a physical sidelink feedback channel PSFCH resource;
a resource at which an N^{th} piece of SCI is located, where N is a positive integer; and
a sidelink synchronization signal and PBCH block S-SSB resource.

The resource indicated by the SCI may be either a resource explicitly indicated by the SCI or a resource implicitly indicated by the SCI. For example, the two resources, namely, the PSFCH resource and the resource at which the N^{th} piece of SCI is located, are calculated according to a preset rule based on a resource A indicated by the SCI, in other words, are determined based on the resource A indicated by the SCI, but are not directly indicated by the SCI.

In some embodiments, the resources are time-domain resources and/or frequency-domain resources, and the resources are in a unit of a slot, symbol, millisecond, second, physical resource block, resource block, or resource element.

In some embodiments, that the terminal performs resource selection and/or resource exclusion based on the first information includes:
The terminal selects a resource or a candidate resource from the recommended resource, where the recommended resource is a resource indicated by a second terminal or located within COT duration or remaining COT duration indicated by the second terminal.

The second terminal is another terminal different from the terminal. For example, the terminal is a receiving terminal. In this case, the second terminal is a transmitting terminal.

In some embodiments, that the terminal performs resource selection and/or resource exclusion based on the first information further includes:

In a case that the terminal does not use the recommended resource, a resource or a candidate resource is selected by using a type 1 channel access procedure. The type 1 channel access procedure is a channel access method that defines LBT idle duration for access and duration of a maximum COT for occupancy after access.

In some embodiments, the recommended resource is a resource indicated or configured by first SCI, second SCI, a radio resource control RRC message, a PC5-RRC message, or a medium access control MAC control element CE.

The PC5-RRC message is an RRC message of a PC5 interface. The PC5 interface is an interface for interaction between a module of a vehicle and the vehicle, a road side device, and a person.

In some embodiments, the first information is information indicated by first SCI, second SCI, an RRC message, a PC5-RRC message, or a MAC CE.

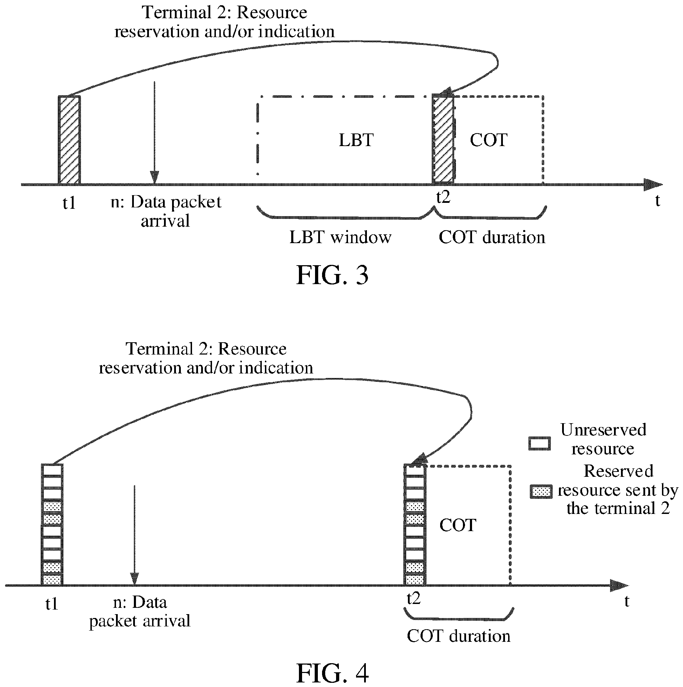

In a specific example, as shown in FIG. 3, UE (UE 1) detects SCI sent by UE 2 at a moment tl. The SCI determines a resource of a moment t2, carrying a COT duration indication, a CW indication, and/or an LBT duration indication. The UE 1 excludes a CW length and/or LBT duration length that are/is before the moment t2, and excludes a resource within COT duration (including t2) where t2 is located. The UE 1 performs the foregoing steps for resource selection.

Alternatively, the UE (UE 1) detects SCI sent by the UE 2 at a moment tl. The SCI is used to determine a resource of a moment t2 and an CAPC indication. The UE 1 determines a maximum value of a CW and/or a maximum value of LBT duration based on the CAPC indication, and determines a length of COT duration based on a CAPC. The UE 1 excludes a maximum length of the CW and/or a maximum length of the LBT duration that are/is before the moment t2, and excludes a resource within COT duration duration (including t2) where t2 is located. The UE1 performs the foregoing steps for resource selection.

The resource of the moment t2 is a resource where a PSSCH is located or a resource of a PSFCH determined based on a PSSCH indicated by the SCI.

In another specific example, as shown in FIG. 4, UE (UE 1) detects SCI sent by UE 2 at a moment tl. Service indication information, destination ID information, and COT duration information are carried in the SCI. If a transmission service indicated in the SCI is broadcast transmission, and/or a destination ID carried in the SCI is an ID corresponding to the UE 1 (which may be considered as a service that the UE 1 needs to receive), the UE 1 selects a resource and/or selects a candidate resource in COT duration indicated by the SCI.

Further, when a destination ID of data to be sent by the UE 1 is the same as a source ID indicated in the SCI, the destination ID of the data to be sent by the UE 1 is an ID corresponding to a broadcast service, and/or the data to be sent by the UE 1 is a broadcast service, the resource and/or the candidate resource are/is selected in the manner described above.

In yet another specific example, UE 1 sends SCI, where the SCI indicates at least one of a reserved resource, recommendation information, and (remaining (remaining)) COT duration. If UE 2 detects the SCI sent by the UE 1 and a data packet indicated by the SCI is receiving information of the UE 2, the UE 2 determines a resource based on a recommendation information indication.

Further, if the recommendation information indication is information carrying a recommended resource, the UE 2 determines a selected resource and/or candidate resource based on a remaining COT.

Further, if the recommendation information indication is information that does not carry a recommended resource, the UE 2 selects a resource and/or candidate resource by using the type 1 channel access procedure.

Further, if the recommendation information indication is the information carrying the recommended resource and the remaining COT satisfies a QoS requirement of a data packet to be sent by the UE 2, a selected resource and/or candidate resource are/is determined based on the remaining COT. Otherwise, the UE 2 select the resource and/or candidate resource by using the type 1 channel access procedure.

An execution subject of the resource selection method provided in embodiments of this application may be a resource selection apparatus. The resource selection apparatus provided by an embodiment of this application is described by using an example in which the resource selection apparatus performs the resource selection method.

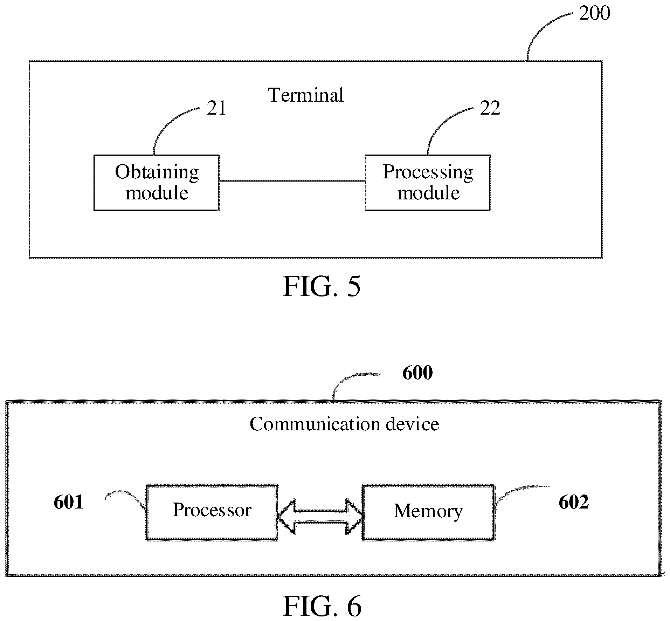

An embodiment of this application provides a resource selection apparatus, applied to a terminal 200. As shown in FIG. 5, the terminal 200 includes:
an obtaining module 21, configured to obtain first information; and
a processing module 22, configured to perform resource selection and/or resource exclusion based on the first information.

The first information includes at least one of the following:
listen before talk LBT information;
channel occupancy time COT information;
information of a recommended resource;
a transmission type;
a source identifier or destination identifier;
channel busy ratio CBR information;
channel occupancy ratio CR information;
quality of service QoS information; and
a data packet size.

In this embodiment of this application, the terminal obtains first information, and performs resource selection and/or resource exclusion based on the first information. The first information may include the LBT information and the COT information. In this case, impact of the LBT information and the COT information is considered when the terminal performs resource selection and/or resource exclusion. In this way, a probability of collision on an unlicensed band can be reduced.

In some embodiments, the LBT information includes at least one of the following:
an LBT category;
channel access priority class CAPC information of a data packet;
duration of first LBT, determined based on a CAPC or a size of a contention window CW;
a size of the CW;
a range of the CW; and
a maximum value of the CW.

In some embodiments, the CAPC information of the data packet includes at least one of the following:
a CAPC of a to-be-sent data packet; and
a CAPC indicated by a receiving resource.
In some embodiments, the COT information includes at least one of the following:
a COT type;
remaining COT duration; and
COT duration.

In some embodiments, the processing module 22 is configured to exclude X resources based on the LBT information, where X is a positive integer, and the X resources satisfy at least one of the following:
the X resources are located before an indicated or reserved first resource;
X is determined based on the duration of the first LBT, or the X resources are determined based on a minimum value of the CW, or the X resources are determined based on the maximum value of the CW, or the X resources are determined based on the maximum value and a minimum value of the CW; and
the X resources are determined based on a priority or a CAPC of a to-be-sent data packet, or a priority or a CAPC in second information.

In some embodiments, the processing module 22 is configured to exclude Y resources based on the COT information, where Y is a positive integer, and the Y resources satisfy at least one of the following:
the Y resources are located at a beginning position of an indicated or reserved first resource, or the Y resources are located after an indicated or reserved first resource;
the Y resources are the COT duration or maximum COT duration;
the Y resources are remaining COT duration or remaining COT duration; and
the Y resources are determined based on a priority or a CAPC of a to-be-sent data packet, or a priority or a CAPC in second information.

In some embodiments, that the processing module 22 is configured to perform resource selection or determine a candidate resource based on the transmission type, the source identifier, and/or the destination identifier includes:
in a case that the transmission type is groupcast or broadcast, selecting, for data transmission, a resource within COT duration corresponding to a first resource; and/or
in a case that the transmission type is unicast and a destination identifier indicated in detected SCI is the terminal, if to-be-sent data of the terminal is broadcast data, selecting, for data transmission, a resource within COT duration or remaining COT duration corresponding to a resource reserved or indicated by the SCI; and if the to-be-sent data of the terminal is groupcast or unicast data and an identifier of the to-be-sent data is the same as a source identifier indicated in the SCI, selecting, for data transmission, a resource within the COT duration or the remaining COT duration corresponding to the resource reserved or indicated by the SCI; and/or
in a case that the destination identifier indicated in the SCI detected by the terminal is the terminal and a destination identifier of a data packet to be sent by the terminal is the source identifier indicated in the SCI, selecting, for data transmission, a resource within the COT duration corresponding to the resource reserved or indicated by the SCI.

In some embodiments, the transmission type is a transmission type indicated in the detected SCI or a transmission type determined based on the destination identifier indicated by the SCI.

In some embodiments, the processing module 22 is configured to: when a remaining resource within the COT duration meets a quality of service requirement and/or a packet delay budget requirement and/or a resource size requirement of a data packet to be sent by the terminal, select, for data transmission, a resource within the remaining COT duration; or
when a remaining resource in the first resource meets a quality of service requirement and/or a packet delay budget requirement and/or a resource size requirement of a data packet to be sent by the terminal, select, for data transmission, a remaining frequency-domain resource in the first resource.

In some embodiments, the resource reserved or indicated by the SCI is at least one of the following:
a physical sidelink shared channel PSSCH resource;
a physical sidelink feedback channel PSFCH resource;
a resource at which an N^{th} piece of SCI is located, where N is a positive integer; and
a sidelink synchronization signal and PBCH block S-SSB resource.
In some embodiments, the first resource is at least one of the following:
the resource indicated or reserved by the SCI;
a resource at which an M^{th} piece of SCI is located, where M is a positive integer;
a PSFCH resource; and
an S-SSB resource.

In some embodiments, the resources are time-domain resources and/or frequency-domain resources, and the resources are in a unit of a slot, symbol, millisecond, second, physical resource block, resource block, or resource element.

In some embodiments, the processing module 22 is configured to select a resource or a candidate resource from the recommended resource, where the recommended resource is a resource indicated by a second terminal or located within COT duration or remaining COT duration indicated by the second terminal.

In some embodiments, the processing module 22 is configured to: in a case that the terminal does not use the recommended resource, select a resource or a candidate resource by using a type 1 channel access procedure.

In some embodiments, the recommended resource is a resource indicated or configured by first SCI, second SCI, a radio resource control RRC message, a PC5-RRC message, or a medium access control MAC control element CE.

In some embodiments, the first information is information indicated by first SCI, second SCI, an RRC message, a PC5-RRC message, or a MAC CE.

The resource selection apparatus in embodiments of this application may be an electronic device like an electronic device having an operating system, or a component in an electronic device like an integrated circuit or a chip. The electronic device may be a terminal or another device other than a terminal. For example, the terminal may include but is not limited to the foregoing listed types of the terminal 200, and the another device may be a server, network attached storage (Network Attached Storage, NAS), and the like. This is not specifically limited in this embodiment of this application.

The resource selection apparatus provided in this embodiment of this application can implement various processes implemented in the method embodiments in FIG. 2 to FIG. 4, and the same technical effects can be achieved. This is not described herein again to avoid repetition.

Optionally, as shown in FIG. 6, an embodiment of this application further provides a communication device 600, including a processor 601 and a memory 602. The memory 602 stores a program or an instruction that can be run on the processor 601. For example, when the communication device 600 is a terminal and the program or instruction is executed by the processor 601, the various steps in the embodiments of the resource selection method are implemented, and the same technical effects can be achieved. This is not described herein again to avoid repetition.

An embodiment of this application further provides a terminal. The terminal includes a processor and a memory. The memory stores a program or an instruction that can be run on the processor. When the program or the instruction is executed by the processor, steps of the foregoing resource selection method are implemented.

An embodiment of this application further provides a terminal, including a processor and a communication interface. The processor is configured to: obtain first information; and perform resource selection and/or resource exclusion based on the first information.

The first information includes at least one of the following:
listen before talk LBT information;
channel occupancy time COT information;
information of a recommended resource;
a transmission type;
a source identifier or destination identifier;
channel busy ratio CBR information;
channel occupancy ratio CR information;
quality of service QoS information; and
a data packet size.

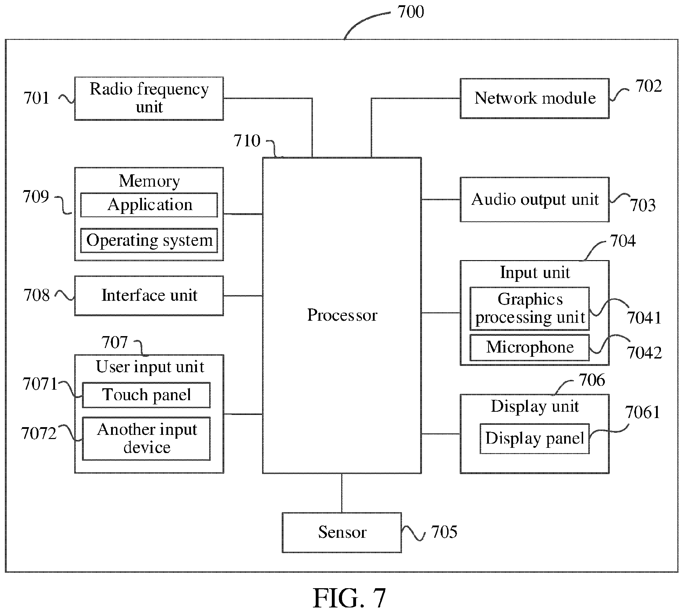

An embodiment of this application further provides a terminal, including a processor and a communication interface. The embodiment of the terminal corresponds to the method embodiment on the terminal side. Each implementation process and implementation of the method embodiments can be applied to the embodiment of the terminal, and the same technical effects can be achieved. Specifically, FIG. 7 is a diagram of a hardware structure of a terminal implementing an embodiment of this application.

The terminal 700 includes, but is not limited to: at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (for example, a battery) for supplying power to the components. The power supply may be logically connected to the processor 710 through a power management system, thereby implementing functions such as charging, discharging, and power consumption management by using the power management system. The terminal structure shown in FIG. 7 does not constitute a limitation on the terminal, and the terminal may include more or fewer components than those shown in the figure, or some components are combined, or a different component arrangement is used.

It should be understood that, in this embodiment of this application, the input unit 704 may include a graphics processing unit (Graphics Processing Unit, GPU) 7041 and a microphone 7042. The graphics processing unit 7041 performs processing on image data of a static picture or a video that is obtained by an image obtaining apparatus (for example, a camera) in a video obtaining mode or an image obtaining mode. The display unit 706 may include a display panel 7061. The display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include, but not limited to, a physical keyboard, a functional key (for example, a volume control key or a switch key), a track ball, a mouse, and a joystick, which are not described in detail herein.

In this embodiment of this application, the radio frequency unit 701 receives downlink data from a network-side device and may transmit the data to the processor 710 for processing. In addition, the radio frequency unit 701 may send uplink data to the network-side device. Usually, the radio frequency unit 701 includes, but is not limited to, an antenna, an amplifier, a transceiver, a coupler, a low noise amplifier, a duplexer, and the like.

The memory 709 is configured to store a software program or an instruction and various data. The memory 709 may mainly include a first storage area storing a program or an instruction and a second storage area storing data. The first storage area may store an operating system, an application or instruction required by at least one function (for example, a sound playing function or an image display function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in this embodiment of this application includes, but is not limited to, these memories and a memory of any other suitable type.

The processor 710 may include one or more processing units. Optionally, the processor 710 integrates an application processor and a modem processor. The application processor mainly processes operations related to an operating system, a user interface, an application, and the like. The modem processor mainly processes a wireless communication signal, for example, a baseband processor. It may be understood that, the modem processor may not be integrated into the processor 710.

In some embodiments, the processor 710 is configured to: obtain first information; perform resource selection and/or resource exclusion based on the first information.

The first information includes at least one of the following:
listen before talk LBT information;
channel occupancy time COT information;
information of a recommended resource;
a transmission type;
a source identifier or destination identifier;
channel busy ratio CBR information;
channel occupancy ratio CR information;
quality of service QoS information; and
a data packet size.
In some embodiments, the LBT information includes at least one of the following:
an LBT category;
channel access priority class CAPC information of a data packet;
duration of first LBT, determined based on a CAPC or a size of a contention window CW;
a size of the CW;
a range of the CW; and
a maximum value of the CW.

In some embodiments, the CAPC information of the data packet includes at least one of the following:
a CAPC of a to-be-sent data packet; and
a CAPC indicated by a receiving resource.
In some embodiments, the COT information includes at least one of the following:
a COT type;
remaining COT duration; and
COT duration.

In some embodiments, the processor 710 is configured to exclude X resources based on the LBT information, where X is a positive integer, and the X resources satisfy at least one of the following:
the X resources are located before an indicated or reserved first resource;
X is determined based on the duration of the first LBT, or the X resources are determined based on a minimum value of the CW, or the X resources are determined based on the maximum value of the CW, or the X resources are determined based on the maximum value and a minimum value of the CW; and
the X resources are determined based on a priority or a CAPC of a to-be-sent data packet, or a priority or a CAPC in second information.

In some embodiments, the processor 710 is configured to exclude Y resources based on the COT information, where Y is a positive integer, and the Y resources satisfy at least one of the following:
the Y resources are located at a beginning position of an indicated or reserved first resource, or the Y resources are located after an indicated or reserved first resource;
the Y resources are the COT duration or maximum COT duration;
the Y resources are remaining COT duration or remaining COT duration; and
the Y resources are determined based on a priority or a CAPC of a to-be-sent data packet, or a priority or a CAPC in second information.

In some embodiments, that the processor 710 is configured to perform resource selection or determine a candidate resource based on the transmission type, the source identifier, and/or the destination identifier includes:
in a case that the transmission type is groupcast or broadcast, selecting, for data transmission, a resource within COT duration corresponding to a first resource; and/or
in a case that the transmission type is unicast and a destination identifier indicated in detected SCI is the terminal, if to-be-sent data of the terminal is broadcast data, selecting, for data transmission, a resource within COT duration or remaining COT duration corresponding to a resource reserved or indicated by the SCI; and if the to-be-sent data of the terminal is groupcast or unicast data and an identifier of the to-be-sent data is the same as a source identifier indicated in the SCI, selecting, for data transmission, a resource within the COT duration or the remaining COT duration corresponding to the resource reserved or indicated by the SCI; and/or
in a case that the destination identifier indicated in the SCI detected by the terminal is the terminal and a destination identifier of a data packet to be sent by the terminal is the source identifier indicated in the SCI, selecting, for data transmission, a resource within the COT duration corresponding to the resource reserved or indicated by the SCI.

In some embodiments, the transmission type is a transmission type indicated in the detected SCI or a transmission type determined based on the destination identifier indicated by the SCI.

In some embodiments, the processor 710 is configured to: when a remaining resource within the COT duration meets a quality of service requirement and/or a packet delay budget requirement and/or a resource size requirement of a data packet to be sent by the terminal, select, for data transmission, a resource within the remaining COT duration; or
when a remaining resource in the first resource meets a quality of service requirement and/or a packet delay budget requirement and/or a resource size requirement of a data packet to be sent by the terminal, select, for data transmission, a remaining frequency-domain resource in the first resource.

In some embodiments, the resource reserved or indicated by the SCI is at least one of the following:
a physical sidelink shared channel PSSCH resource;
a physical sidelink feedback channel PSFCH resource;
a resource at which an N^{th} piece of SCI is located, where N is a positive integer; and
a sidelink synchronization signal and PBCH block S-SSB resource.
In some embodiments, the first resource is at least one of the following:
the resource indicated or reserved by the SCI;
a resource at which an M^{th} piece of SCI is located, where M is a positive integer;
a PSFCH resource; and
an S-SSB resource.

In some embodiments, the resources are time-domain resources and/or frequency-domain resources, and the resources are in a unit of a slot, symbol, millisecond, second, physical resource block, resource block, or resource element.

In some embodiments, the processor 710 is configured to select a resource or a candidate resource from the recommended resource, where the recommended resource is a resource indicated by a second terminal or located within COT duration or remaining COT duration indicated by the second terminal.

In some embodiments, the processor 710 is configured to: in a case that the terminal does not use the recommended resource, select a resource or a candidate resource by using a type 1 channel access procedure.

In some embodiments, the recommended resource is a resource indicated or configured by first SCI, second SCI, a radio resource control RRC message, a PC5-RRC message, a medium access control MAC control element CE.

In some embodiments, the first information is information indicated by first SCI, second SCI, an RRC message, a PC5-RRC message, or a MAC CE.

An embodiment of this application further provides a readable storage medium. The readable storage medium stores a program or an instruction. When the program or the instruction is executed by a processor, the processes of the foregoing resource selection method embodiments are implemented and the same technical effects are achieved. To avoid repetition, details are not described herein again.

The processor is the processor in the terminal in the foregoing embodiments. The readable storage medium includes a computer-readable storage medium, for example, a computer read only memory ROM, a random access memory RAM, a magnetic disk, an optical disk, and the like.

An embodiment of this application further provides a chip. The chip includes a processor and a communication interface. The communication interface and the processor are coupled. The processor is configured to run a program or an instruction, so that the processes of the foregoing resource selection method embodiments are implemented and the same technical effects are achieved. To avoid repetition, details are not described herein again.

It should be understood that the chip mentioned in this embodiment of this application may also be referred to as system on chip, system-on-chip, System on Chip, SoC, or the like.

An embodiment of this application further provides a computer program product. The computer program product is stored in a storage medium. The computer program product is executed by at least one processor, so that the processes of the foregoing resource selection method embodiments are implemented and the same technical effects are achieved. To avoid repetition, details are not described herein again.

It is to be noted that in this specification, the terms "include", "comprise", and any variation thereof are intended to cover a non-exclusive inclusion. Therefore, a process, a method, an object, or an apparatus that includes a series of elements not only includes such elements, but also includes other elements not specified expressly, or may include inherent elements of the process, the method, the object, or the apparatus. Without more limitations, an element defined by the phrase "including one" does not exclude a case in which there are still other same elements in a process, a method, an object, or an apparatus including the element. Further, it should be noted that the scope of the method and apparatus in embodiments of this application is not limited to the shown or discussed orders in which the functions are implemented. Alternatively, depending on the functions, the functions maybe performed in a substantially simultaneous manner or in a reverse order. For example, the described method may be performed in an order different from the described order, and various steps may be added, omitted, or combined. In addition, features described with reference to some examples may be combined in other examples.

According to the descriptions in the foregoing implementations, a person skilled in the art may clearly learn that the method according to the foregoing embodiments may be implemented by relying on software and a necessary common hardware platform or by using hardware. However, in most cases, the former is more preferred. Based on such an understanding, the technical solutions of this application essentially, or the part contributing to the conventional technology, may be presented in a form of a computer software product. The computer software product is stored in a storage medium (for example, a ROM/RAM, a magnetic disk, or an optical disc), including several instructions to enable a terminal (which may be a mobile phone, a computer, a server, an air conditioner, a network device, or the like) to perform the methods described in embodiments of this application.

Embodiments of this application are described above with reference to the accompanying drawings. This application is not limited to the embodiments described above, and the embodiments described above are merely examples but not limitations. A person of ordinary skill in the art may make various variations under the teaching of this application without departing from the purpose of this application and the protection scope of the claims, and such variations shall all fall within the protection scope of this application.

## Claims

1. A resource selection method, comprising:
obtaining, by a terminal, first information; and
performing, by the terminal, resource selection and/or resource exclusion based on the first information, wherein
the first information comprises at least one of the following:
listen before talk LBT information;
channel occupancy time COT information;
information of a recommended resource;
a transmission type;
a source identifier or destination identifier;
channel busy ratio CBR information;
channel occupancy ratio CR information;
quality of service QoS information; and
a data packet size.

2. The method according to claim 1, wherein the LBT information comprises at least one of the following:
an LBT category;
channel access priority class CAPC information of a data packet;
duration of first LBT, determined based on a CAPC or a size of a contention window CW;
a size of the CW;
a range of the CW; and
a maximum value of the CW.

3. The method according to claim 2, wherein the CAPC information of the data packet may comprise at least one of the following:
a CAPC of a to-be-sent data packet; and
a CAPC indicated by a receiving resource.

4. The method according to claim 1, wherein the COT information comprises at least one of the following:
a COT type;
remaining COT duration; and
COT duration.

5. The method according to claim 2, wherein the performing, by the terminal, resource selection and/or resource exclusion based on the first information comprises:
excluding, by the terminal, X resources based on the LBT information, wherein X is a positive integer, and the X resources satisfy at least one of the following:
the X resources are located before an indicated or reserved first resource;
X is determined based on the duration of the first LBT, or the X resources are determined based on a minimum value of the CW, or the X resources are determined based on the maximum value of the CW, or the X resources are determined based on the maximum value and a minimum value of the CW; and
the X resources are determined based on a priority or a CAPC of a to-be-sent data packet, or a priority or a CAPC in second information.

6. The method according to claim 4, wherein the performing, by the terminal, resource selection and/or resource exclusion based on the first information comprises:
excluding, by the terminal, Y resources based on the COT information, wherein Y is a positive integer, and the Y resources satisfy at least one of the following:
the Y resources are located at a beginning position of an indicated or reserved first resource, or the Y resources are located after an indicated or reserved first resource;
the Y resources are the COT duration or maximum COT duration;
the Y resources are remaining COT duration or remaining COT duration; and
the Y resources are determined based on a priority or a CAPC of a to-be-sent data packet, or a priority or a CAPC in second information.

7. The method according to claim 1, wherein the performing, by the terminal, resource selection and/or resource exclusion based on the first information comprises:
performing resource selection or determining a candidate resource, by the terminal, based on the transmission type, the source identifier, and/or the destination identifier comprises:
in a case that the transmission type is groupcast or broadcast, selecting, for data transmission, a resource within COT duration corresponding to a first resource; and/or
in a case that the transmission type is unicast and a destination identifier indicated in detected SCI is the terminal, if to-be-sent data of the terminal is broadcast data, selecting, for data transmission, a resource within COT duration or remaining COT duration corresponding to a resource reserved or indicated by the SCI; and if the to-be-sent data of the terminal is groupcast or unicast data and an identifier of the to-be-sent data is the same as a source identifier indicated in the SCI, selecting, for data transmission, a resource within the COT duration or the remaining COT duration corresponding to the resource reserved or indicated by the SCI; and/or
in a case that the destination identifier indicated in the SCI detected by the terminal is the terminal and a destination identifier of a data packet to be sent by the terminal is the source identifier indicated in the SCI, selecting, for data transmission, a resource within the COT duration corresponding to the resource reserved or indicated by the SCI.

8. The method according to claim 7, wherein the transmission type is a transmission type indicated in the detected SCI or a transmission type determined based on the destination identifier indicated by the SCI.

9. The method according to claim 7, wherein the in a case that the transmission type is groupcast or broadcast, selecting, for data transmission, a resource within COT duration or remaining COT duration corresponding to a first resource comprises:
when a remaining resource within the COT duration meets a quality of service requirement and/or a packet delay budget requirement and/or a resource size requirement of a data packet to be sent by the terminal, selecting, for data transmission, a resource within the remaining COT duration; or
when a remaining resource in the first resource meets a quality of service requirement and/or a packet delay budget requirement and/or a resource size requirement of a data packet to be sent by the terminal, selecting, for data transmission, a remaining frequency-domain resource in the first resource.

10. The method according to claim 7, wherein the resource reserved or indicated by the SCI is at least one of the following:
a physical sidelink shared channel PSSCH resource;
a physical sidelink feedback channel PSFCH resource;
a resource at which an N^{th} piece of SCI is located, wherein N is a positive integer; and
a sidelink synchronization signal and PBCH block S-SSB resource.

11. The method according to claim 5, 6, or 7, wherein the first resource is at least one of the following:
the resource indicated or reserved by the SCI;
a resource at which an M^{th} piece of SCI is located, wherein M is a positive integer;
a PSFCH resource; and
an S-SSB resource.

12. The method according to claim 5, 6, or 7, wherein the resources are time-domain resources and/or frequency-domain resources, and the resources are in a unit of a slot, symbol, millisecond, second, physical resource block, resource block, or resource element.

13. The method according to claim 1, wherein the performing, by the terminal, resource selection and/or resource exclusion based on the first information comprises:
selecting, by the terminal, a resource or a candidate resource from the recommended resource, wherein the recommended resource is a resource indicated by a second terminal or located within COT duration or remaining COT duration indicated by the second terminal.

14. The method according to claim 13, wherein the performing, by the terminal, resource selection and/or resource exclusion based on the first information further comprises:
in a case that the terminal does not use the recommended resource, selecting a resource or a candidate resource by using a type 1 channel access procedure.

15. The method according to claim 1, wherein the recommended resource is a resource indicated or configured by first SCI, second SCI, a radio resource control RRC message, a PC5-RRC message, or a medium access control MAC control element CE.

16. The method according to claim 1, wherein the first information is information indicated by first SCI, second SCI, an RRC message, a PC5-RRC message, or a MAC CE.

17. A resource selection apparatus, comprising:
an obtaining module, configured to obtain first information; and
a processing module, configured to perform resource selection and/or resource exclusion based on the first information, wherein
the first information comprises at least one of the following:
listen before talk LBT information;
channel occupancy time COT information;
information of a recommended resource;
a transmission type;
a source identifier or destination identifier;
channel busy ratio CBR information;
channel occupancy ratio CR information;
quality of service QoS information; and
a data packet size.

18. The resource selection apparatus according to claim 17, wherein the LBT information comprises at least one of the following:
an LBT category;
channel access priority class CAPC information of a data packet;
duration of first LBT, determined based on a CAPC or a size of a contention window CW;
a size of the CW;
a range of the CW; and
a maximum value of the CW.

19. The resource selection apparatus according to claim 17, wherein the COT information comprises at least one of the following:
a COT type;
remaining COT duration; and
COT duration.

20. A terminal, comprising a processor and a memory, wherein the memory stores a program or an instruction that can be run on the processor, and when the program or the instruction is executed by the processor, steps of the resource selection method according to any one of claims 1 to 16 are implemented.

21. A readable storage medium, wherein the readable storage medium stores a program or an instruction, and when the program or the instruction is executed by a processor, steps of the resource selection method according to any one of claims 1 to 16 are implemented.
